# EUROPEAN PATENT APPLICATION

(11) **EP 1 845 471 A2**
(43) Date of publication of application: **17.10.2007**
(21) Application number: 07007617.9
(22) Date of filing: 13.04.2007
(51) Int. Cl.: G06F 21/00

(54) **Web-based method for accessing licensed products and features**

(30) Priority: 13.04.2006 US 403197
(71) Applicant: Bowe Bell + Howell Company, Durham NC 27713-1803 (US)
(72) Inventor: Motley, Paul Thomas, Waterloo, Ontario N2V1Z1 (CA); Rawlings, David, Kitchener, Ontario N2P2P6 (CA); Richards, Bob, Kitchener, Ontario N2R-1M5 (CA); Spitzing, Roger, St. Clements, Ontario N0B2M0 (CA)
(74) Representative: Zimmermann, Tankred Klaus

(57) **Abstract**

The present subject matter relates to systems and methods related to licensing and licensing activation. In particular, the present subject matter relates to a system and method for managing the overall licensing and function/feature deployment process throughout an enterprise. More particularly, the present approach involves providing a user with access to a licensing system and providing access to at least one attribute of the licensing data for one or more products from the licensing system.

## Description

### Cross Reference to Related Applications

This application is related to U.S. patent application Serial No. 11/403,156 filed 13 April 2006, entitled "WEB-BASED METHOD AND SYSTEM FOR ENABLING LICENSED PRODUCTS AND FEATURES", the entire disclosure of which is incorporated herein by reference.

### Technical Field

The present subject matter relates to systems and methods related to licensing and licensing activation. The exemplary techniques described herein pertain to product licensing and product function or feature enablement, and specifically, the licensing and function/feature enablement of products in a secured manner via the activation of a security device such as a dongle.

### Background

A dongle, or security device, is a device that attaches to or operates upon a computer or hardware system to control access to a particular functional application (e.g., hardware or software application or feature). In a day and age where piracy and misappropriation of software applications and functional system feature manipulation is rampant, dongles provide a highly effective means of copy protection and feature control. Furthermore, a dongle may be utilized as a means of enabling the activation of only certain features of a product, typically software or firmware, while preventing the usage of other features. Dongles are often used by many proprietary vendors, such as high end software manufacturers, as a form of copy prevention or digital rights management, simply because it is much harder to copy the dongle than to copy the software the dongle authenticates.

Typically, the dongle physically attaches to a PC's parallel port, USB or other peripheral input/output channel. Even though physically connected to a PC or other computing device, the dongle may pass through all data coming through the port so it does not prevent the port from being used for other purposes. In fact, it is possible to attach several dongles (e.g., non-USB based dongles) to the same port by daisy-chaining the dongles (coupling them) to each other, wherein each additional dongle enables or protects a different software application or feature. Alternatively, dongles may also be implemented as software devices-executable program modules that emulate the functions of a hardware dongle. Regardless of the implementation, dongles do provide a tangible form of security as software modules or physical devices, and are most often used at run-time of a software package to enable its various functions and features.

Modem day security devices include built-in strong encryption (e.g., 128 bit encryption) and use fabrication techniques designed to thwart reverse engineering. Some dongles also contain non-volatile memory for allowing key parts of the software to actually be stored in the dongle, or for storing security protocol data. In order for the user of the application requiring the activation of a security device to access the application, user authentication is required. Using the legitimate user's Personal Identification Number (PIN) or password (e.g., hardware encryption key), access to the key's data will be granted, and hence, access to the necessary functions or data for enabling the running of the software is granted. While various configurations of dongles exist today, they all generally contain a security protocol designed by the dongle manufacturer, usually possessing programmable memory to store product configuration data that is only accessible through the security protocol and a universal computer interface. Programming or loading of the product configuration data is done by the product manufacturer using the dongle security to enable the product features that were ordered. Resultantly, the dongle must be hard-wired and/or programmed on an individual custom basis.

Unfortunately, the usage of security devices is not without limitation. For example, a new dongle must be sent out by the product manufacturer in order to enable software features that were not available during the initial dongle programming and/or hardwiring phase. As a result, software updates must be accompanied by a new dongle device, which of course results in extra cost to the software and/or hardware vendor (a cost typically passed on to the user). Furthermore, the older version software application operating on the user computer is rendered useless, or must be used in its non-updated state at best, until the dongle arrives. This translates into lack of productivity and lack of convenience for the user of the software package.

Another challenge with dongles has to do with their deployment, and more importantly, their management for business accountability (e.g., for usage in sales and/or marketing). For example, a sales representative affiliated with a software company must also utilize a security device in order to run demonstrations at a current or prospective customer's site. Hence, any demonstration or manufacturing test software is fully functional and could be used in production, which is counterintuitive in instances where the sales rep failed to disable the software after the test or demonstration period. The current licensing process which includes the usage of the dongle, offers poor control over demonstration, trade-show and manufacturing units deployed in the field-poor control which could result in unwarranted usage of the software product or delayed authorization to use product features that have been ordered.

Aside from the usage of dongles, the software licensing and new feature enablement process within an enterprise that utilizes multiple applications and application server systems can be difficult to manage. This is best understood in the context of an industrial or commercial manufacturing environment, such as in the mail processing industry, where several different types of machinery (inserters, sorters, cutters, accumulators, transport devices, etc.) may be utilized in one facility, all operating different software and/or hardware. When licenses must be renewed or features must be added or enabled for software or hardware in such an environment, the product manufacturer must update each operating computer, server, or machine individually, which can be timely and costly. Moreover, the licensing process in this scenario becomes more cumbersome in the absence of a uniform product licensing procedure as each product may require its own special function calls based on the device upon which it operates. This level of complexity in licensing or updating/enablement is obviously more difficult to execute, track, and manage.

To address the challenges described above, a method and system is required to allow for the customization of a security device to accommodate product updates and/or new product functions or features to be enabled without the need for untimely and costly dongle replacement. Furthermore, a way is needed for products of all kinds, be they software and/or hardware or both, to be activated according to a trial period, wherein the dongle need not be replaced at the time of activation or expiration of the trial period. Still further, a more effective licensing and enablement process is needed in order to manage the overall product licensing process of a facility that employs multiple products and/or applications.

### Summary

The present subject matter relates to systems and methods related to licensing and licensing activation.

In accord with the present concepts disclosed herein, there is provided a method that includes the step of providing a user with access to a website of a licensing system for at least one mail processing product. The user is authenticated via a user identification protocol, as a valid user from among a plurality of valid users, wherein different levels of user access capability for the purpose of accessing licensing data, are provided to groups comprising one or more of the valid users. The authenticated user is provided with a level of licensing data access assigned to one of the groups of which the authenticated user is a member. Access is provided to at least one attribute of the licensing data for at least one mail processing product from the licensing system, based at least in part on the granted level of access.

Also disclosed is a method involving a licensing transaction. The transaction includes receiving a request for enablement of a selected feature from among a plurality of features associated with a type of mail processing product via a licensing website. Control data is sent, wherein the control data is for activation of the selected feature to be enabled for the identified mail processing product, to a security device for association with the identified mail processing product. The activation of the selected feature for the identified mail processing product is recorded.

It is also desirable to provide a method that includes establishing an Internet link between a user access device and a licensing system server. The user of the user access device is authenticated via a user identification protocol. Control data is obtained for provisioning at least one operating function of at least one product from the licensing system server via the Internet. The control data is supplied from the user access device to a security device that is to be used to activate the at least one operating function of the at least one product, to program the security device.

In yet another aspect a method is provided which includes receiving an access request at a licensing system server from a user access device by way of a Internet link. The identification of the user of the user access device is authenticated. A selection at least one operating function of at least one product is received. Control data is transmitted to a security device via the Internet link and the user access device, so as to allow the security device to enable the selected operating function on the product.

Additional advantages and aspects of the present subject matter will become readily apparent to those skilled in the art from the following detailed description, wherein embodiments of the present subject matter are shown and described, simply by way of illustration of the best mode contemplated for practicing the present subject matter. As will be described, the present subject matter is capable of other and different embodiments, and its several details are susceptible of modification in various obvious respects, all without departing from the spirit of the present subject matter. Accordingly, the drawings and description are to be regarded as illustrative in nature, and not limitative.

### Brief Description of the Drawings

The following detailed description of the embodiments of the present subject matter can best be understood when read in conjunction with the following drawings, in which the various features are not necessarily drawn to scale but rather are drawn as to best illustrate the pertinent features, and in which like reference numerals are employed throughout to designate similar features:

Fig. I depicts an exemplary high level software feature enablement and licensing environment;

Fig. 2 is an exemplary depiction of the various components that comprise the software feature enablement and licensing system from the client perspective;

Fig. 3 is an exemplary depiction of a client key programmer;

Fig. 4 is an exemplary depiction of how various users interact within the software feature enablement and licensing environment;

Fig. 5 is an exemplary depiction of a sorter device comprised of varying components having differing features available;

Fig. 6 is an exemplary high level flowchart depicting the overall software licensing and feature enablement process;

Fig. 7 is an exemplary flow chart of the license account establishment process;

Fig. 8 is an exemplary flow chart of the license creation process;.

Fig. 9 is an exemplary flow chart of the license purchasing process; and

Fig. 10 is an exemplary flow chart of the license acquisition process.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

The exemplary teachings presented herein correspond to a method and system for enabling the activation of licensed functions or features for execution by an operating device. The teachings also pertain to a centralized system for managing the overall licensing and function/feature deployment process throughout an enterprise having a plurality of devices. As described herein, a license (also referred to as license data of feature(s)) may include but is not limited to any data, information, rights, decrees, agreements and/or instructions, along with any software, hardware or firmware features (e.g., modules, function calls, data sets, algorithms) that enable a device or software operable upon the device to execute one or more processing functions. As used herein, the specific data used to program the security device is referred to as control data. Those skilled in the art will appreciate that the teachings and techniques presented herein may be useful for the activation of various types of licenses, including but not limited to, temporary or limited license issuance, demonstration/showroom licensing, trial period licensing, etc. The licensing and accompanying security device (e.g. dongle) programming may be used to control software, firmware and system features (e.g., electronic or mechanical systems) whether these features are part of the run-time or machine control software, batch or real-time software data processing applications or equipment hardware and firmware features.

Furthermore, the teachings herein may be utilized for performing various means of function or feature enablement, including but not limited to enabling special software patches for debugging purposes, modules for enhancing current features associated with the electro-mechanical operation of a device, modules for enabling or unmasking software or operating device features not currently authorized for usage, modules for integrating a software package for proper usage with device operating system requirements, modules for incorporating entirely new functionality, firmware or hardware functions and processes, and any other features which may individually or in part constitute or are associated with the license. This group of functions or features enables a single security device to be used to control software, hardware or firmware installation (install-time) as well as control the operational usage of a product or group of products and to control the operational usage of functions or features within the products while the products are being utilized (run-time).

The foregoing discussion pertaining to software and/or hardware licensing and product function or feature enablement is presented within the context of a mail processing environment by way of example, and not by limitation. A mail processing environment may be any setting that employs the usage of one or more mail processing devices such as inserters, sorters, vision systems, mail item characteristic detection devices (e.g., electronic scales, digital meters), printers, address recognition systems, and various signal driven/actuated devices such as paper cutters and folders. In concurrence with the operation of these devices may be one or more computing devices, firmware or microprocessor based modules, and various types of operational software that may also require licensing and/or feature enablement. Examples of such software may include but are not limited to, statement formatting, pre-sorting, print optimizing, address cleansing, barcode detection, mail item identification, inbound and outbound sort scheme generation, document/mail item generation products and the like. Indeed, various devices, software, firmware, processors, mechanisms, operational schemes, etc. may be utilized within a mail processing environment depending upon the application requirements of that environment. The teachings presented herein pertain to the licensing of products designed for all aspects of the mailing environment, from transactional products (e.g., business-to-business or direct mailing operations) to device driven products (e.g., camera-based verification, image capture technology, data archiving) to customer resource management applications. Likewise, the teachings may be applicable to the licensing of products usable to facilitate operations within an automated document factory (ADF), where automated processes, machinery and software are engaged to facilitate the workflow and distribution of documents.

Of course, practitioners of the art will observe that the application of the teachings herein may apply to any environment wherein software applications are used to facilitate control of products (e.g., software and/or hardware devices). This includes, but is not limited to, mechanical devices, pneumatic and/or hydraulic control equipment, electrical and electro-mechanical devices, robotic devices, firm-ware and other microprocessor based devices, and any systems or subsystems of the preceding thereof. Indeed, the teachings are relevant to any environment wherein products are required to be licensed for authorized usage and deployment, where the product manufacturer wishes to ensure some level of security against misusage or misappropriation of protected digital works/arts/media/modules/algorithms/devices/equipment, and wherein one or more features are periodically to be made available by the product vendor or enabled by the vendor for usage by the user.

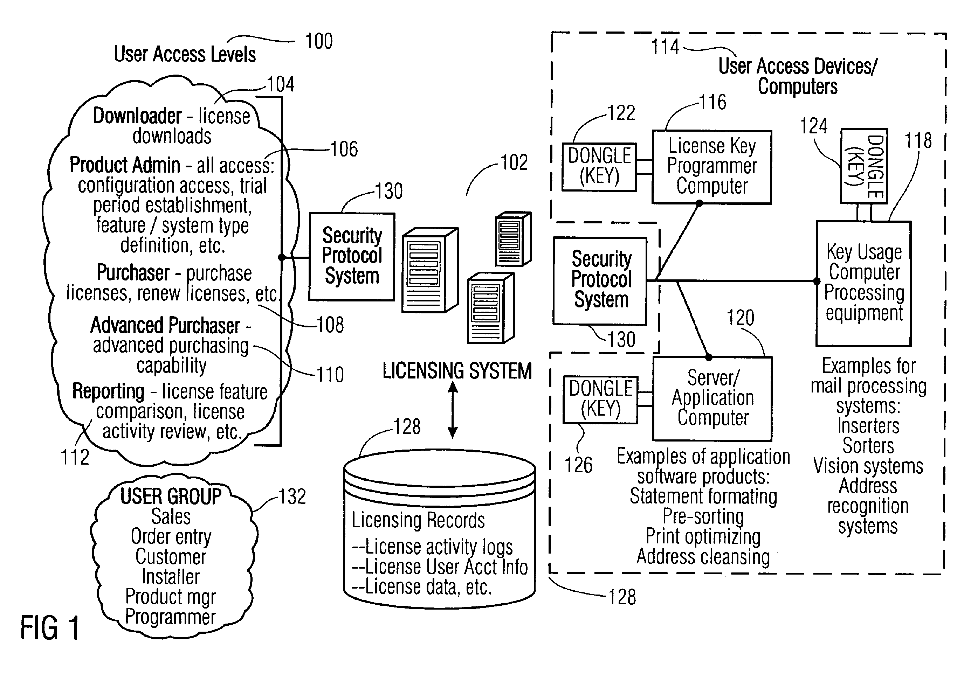

With this in mind, reference is now made to FIG. 1, which depicts an exemplary environment for performing a product licensing and enablement process. In order for a web based licensing system to operate correctly and to maintain the necessary levels of security, plus client and product information, the licensing system of servers and computers 102 must be integrated with a security protocol system 130 that manages the licensing system access by user groups 132 or systems 116, 118, 120 that are used to program security devices such as dongles 122, 124, 126. The centralized licensing records 128 are a central aspect of the licensing system. In a web based accessed design, centralized should not be considered literally since numerous techniques are used by those skilled in the art to obtain access from a web session without all of the data being physically stored in a single computer.

If multiple users 132 with different user access levels 100 and many diverse products and product configurations are going to be managed by the web based licensing system, data integrity must be closely managed. Therefore attributes of licensing records 128 are an important part of the system. Activity logs, user account information, access authorization plus other security features will be maintained in the licensing records. Product hierarchical data about each product is maintained. The hierarchical data may include customer eligibility for the product (based on resources and equipment installed at a customer's site), product configuration and functions or features available within the product that can be enabled. The product manager in the user group 132 generally is the only user authorized to make changes to the product hierarchy. This enables a consistent level of accountability and licensing record integrity to be maintained in a hierarchical system that enables a plurality of users of varying access levels 100 to influence a licensing transaction.

Information about the customer is included in the licensing records. This data may include current product configurations and software suites installed at the customer's site or capabilities included in the customer's overall enterprise that include multiple sites. The customer information may include product licensing status such as paid licenses for products and features, renewal dates, maintenance/software support contracts and version level of all installed and licensed products.

Also included in the licensing records 128, is financial data associated with all transactions. This financial data may include information that would allow a customer to directly order and pay for products. Order entry and sales personnel may have access to the financial data in order to know if any corrective actions are needed with a customer account before additional products are licensed. The discussion of contents and features in the licensing records are provided as examples and in no way are considered comprehensive. Those skilled in the art may add significant detail as the concept and features are expanded and implemented to serve the full range of web based product licensing.

A unique feature of the web based licensing concept is the large number of members in the user group 132 that can be accommodated with a single licensing system approach. Normally access to a licensing system that is capable of programming security devices is limited to a few authorized personnel. This limitation is driven by the lack of all the necessary data being in one place and accessible to any user that has authorization. This limitation is overcome by the usage of centralized, consistently maintained licensing records 128. The web based structure allows for a user to be located at any location that is connected to the Web versus being located in the factory. The security protocol system ensures that a given user 132 is given only the correct user access level 100 (licensing system assess) and controls communication encryption as appropriate for the data being exchanged. The licensing system may require that tools or client key user software be downloaded to the computer system being used for access in order to manage security, run browser applications, program security devices or perform required functions. Those skilled in the art will appreciate that other users and additional access control features maybe added.

User access devices and computers 114 are exemplary computing devices through which the licensing system may be accessed by a user. The conventional art would have the license key programmer computer 116 located in the factory and not connected to a licensing record system 128. This conventional methodology may limit the licensing options available to the security device programmer and create configuration issues when the product manager changes product features or adds additional products. Since the exemplary web based licensing system has one set of licensing records and all users have varying levels of access to the data via the web, license processing and management short comings are eliminated. The web based access and security protocol enable the programming of security devices that are attached to customer products. The computer in a mail processing system 118 that has an existing security device 124 or an application server 120 running batch or real time software applications can both be used to program a security device. All that is required is user authentication and a secure version of the security device programming software (client key), which could be downloaded from the Web. In other words, a product installer can reload features onto the security device without any unique programming tools and with no risk of using out of date data since the web connects the installer to the single source of licensing records.

Also key to this approach is the fact that a single design of the security device 120 can be programmed to control the software to be loaded at installation time and to control software features availability at run time. In addition, since mail processing equipment is controlled by a computer that controls firmware and hardware features, the same security device can be used to enable these system features. Additional detail on each subsystem in the licensing system is provided in the following sections. Various users 100, having varying levels of access and privileges with respect to the product licensing system 102, are shown. Usage levels include, but are not limited to the following:

### Downloader

A Downloader 104 is a user having the right to download and install a license key programmer application (described later) and then download license data to a license key (e.g., dongle).

### Product Administrator

A Product Administrator 106 is synonymous with the manager of the license and feature enablement process. This describes a user that is responsible for performing various functions of the licensing system 102 relative to a specific software product/license, including but not limited to configuring the product or license, the feature groups to be associated with the license, configuring the features and the system types for the license (explanations of feature groups, system types, etc. will be provided in subsequent paragraphs). The Product Administrator 106 is the only user that has access to the license management/configuration functions of the licensing system 102. Furthermore, the Product Administrator 106 also has all the access rights that the Purchaser 108, Advanced Purchaser 110, Reporting 112 and Downloader 104 users encompass.

### Purchaser

The Purchaser 108 describes a user responsible for facilitating the purchase of a license and/or its associated features. This user has access to only the license purchase functions, license renewal functions, and license review functions of the licensing system 102 for a specific product/license. The Purchaser 108 also has all the access rights that the Downloader 104 does.

### Advanced Purchaser

The Advanced Purchaser 110 describes a user having all the licensing system 102 access rights that the Purchaser 108 entails, however it includes additional access rights including but not limited to the ability to renew licenses until a specific date, purchase maintenance, changing the stored/imprinted license data, putting a license on hold (e.g., suspension), purchasing of restricted license types and viewing a listing of all the features and/or licenses associated with a specific product. This user also has all the access rights that the Downloader 104 does.

### Reporter

The Reporter 112 describes a user that is responsible for performing reporting functions of the licensing system 102 including but not limited to viewing and reporting on licenses associated with one or more systems, viewing features associated with one or more licenses, comparing licenses, etc. This user also has all the access rights that the Downloader 104 does.

A user may act simultaneously or concurrently function as one or more of the above described users during and/or throughout the licensing process. Furthermore, while not listed as a specific role, a customer may be authorized to act in the capacity of one or more of the above listed users. Indeed, user designations and functions may vary depending on the needs and demands of the enterprise engaged in the licensing process.

The above described users 100 may access the licensing system 102 via the usage of one or more user access devices 114 (e.g., handheld, laptop, desktop, server, tablet pc) that is capable of communicating over a network with the licensing system 102 to access (e.g., modify, view, define) license data and/or that is at least capable of enabling the usage of a license and its associated features for another device (e.g., an application server which enables the execution of the software across a multitude of enterprise computers). The network communication can be internal/local such as via an intranet communication link or external/remote, such as via an internet communication link. Exemplary access devices include but are not limited to, a license key programmer device 116, a server/application device 118, and a primary key usage device 120. Such devices may be used singularly or collectively depending on the processing and software distribution needs of the facility or enterprise.

A license key programmer computer 116 is a dedicated computing or like device upon which control data is to be downloaded. A user having at least downloader 104 access to the licensing system 102 can download the license contents for direct integration of the data with a security key or device (dongle) 122 coupled to the license key programmer computer 116. Alternatively, a license key 122 need not be coupled to the device, such that the control data is simply stored temporarily by the license key programmer computer 116 for future transfer to a primary key usage computer 118 (a computer upon which the desired software application is to be executed). In this instance, once the control data is transferred to computer 118, it may then be integrated appropriately with a security key or device 124 coupled thereto (such functionality being dependent upon satisfaction of any machine level or hardware signature requirements). Hence, the license key programmer computer 116 can be a device dedicated solely for the purpose of acquiring control data for direct or indirect integration of the data with a security key or device.

As discussed, a server application computer 120 may also be utilized to facilitate the function or feature enablement and licensing process. The server application computer 120 may act as a computer responsible for running applications on behalf of a plurality of computers. In this scenario, one or more computers having network access to the server application computer 120 can run a software package internally or externally remotely-the software package need not be loaded upon the one or more computers capable of linking to the server application computer 120 directly. A user of the server application computer 120 having at least download access 104 could acquire control data for direct integration with a license key 126, and therefore, unilaterally influence the feature capability of each of the one or more computers or devices capable of being linked with computer 120. As will be discussed in later paragraphs of the detailed description, the server application computer 120 can also be utilized to manage one or more computers or devices having differing function or feature enablement needs.

The licensing system 102 may comprise a plurality of computing devices including but not limited to web servers, hubs, routers, domain name servers, server clusters, databases, firewalls, software applications and other computing machinery or tools useful for facilitating the exchange of information via a computer network (e.g., the internet). In the case of web based communication exchange, the licensing system 102 may include one or more servers or computers having access to and responsibility for generating web page content information (e.g., content viewable by a user of a web browser). Also, the licensing system may include at least a database for the storage of license records. The records may include, but are not limited to, license activity and event logs, license user account information, the control data to be downloaded by the security device (e.g. dongle), and any license data associated with a respective license user account. Ultimately, the licensing system 102 facilitates the exchange of all information pertaining to a license and/or its associated functions or features relative to a specific software application. To the extent that web based communication is performed via the network, the licensing system 102 acts as a licensing website 102, having full access to said functionality and resources.

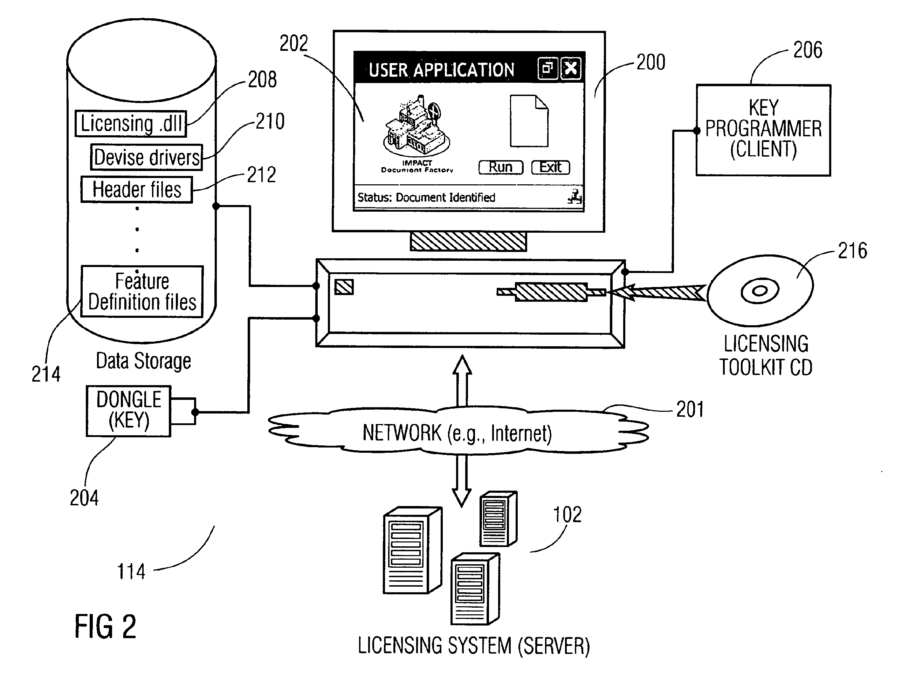

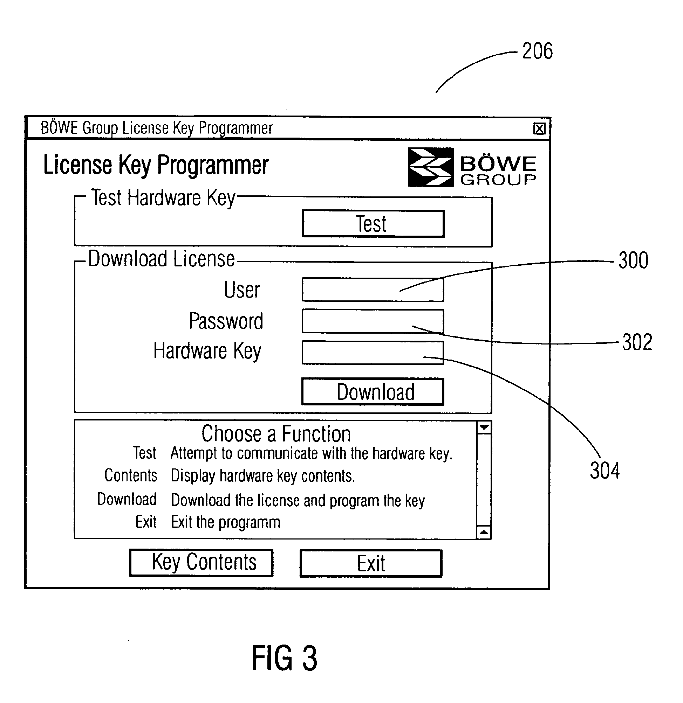

Turning now to FIG. 2, an exemplary depiction of the various components that comprise a user access computer 114 are shown. As stated previously, various users having varying access privileges 100 may access the licensing website 102 via a user access computer 114 from over a network 201. The common denominator amongst the users 100 of a user access computer or device 114 is that they at least have downloader 104 access privileges. The user access computer 114 generally comprises a display 200, capable of displaying a graphical user interface for enabling the execution of a user application 202 (e.g., the software application for which the license is to be applied) or a web based software program, such as a web browser, for facilitating communication with the licensing system 102. Also included with the user access computer 114 is a security key or device (dongle) 204, which stores control data acquired from the licensing website 102 by an authorized downloader via a software utility referred to as a client key programmer 206. The client key programmer is illustrated by way of example in FIGS. 2, and with more detail in FIG. 3.

The client key programmer 206 is a software utility that allows the user to download license data for integration with the license key. It is installed onto the user access computer 114 via a storage medium (e.g., a CD 216) having stored thereon various data, instructions, algorithms, commands, application interface (APIs) functions, dynamic link library (DLLs) calls 208, device drivers 210, header files 212, and the like for ensuring the appropriate operation of and interplay between the user application 202 to be licensed, and the license data and associated features desired to be executed by the user application 202. Such data is stored onto the user access computer for operation as needed to facilitate processing of the user application 202. Those skilled in the art will recognize that various data storage mediums are available for enabling the loading of data onto a system including but not limited to floppy disks, memory sticks and zip drives, as well as numerous data transmission techniques such as File Transfer Protocol (FTP). As such, any means by which a user having downloader access privileges may acquire the client key programmer 206 is within the scope of the teachings presented herein.

Access to the client key programmer 206, however, is not sufficient enough in itself to enable control data to be downloaded and integrated with a security device or key. A security and authentication process is invoked by the client key programmer 206, including but not limited to the transmission of an assigned user name 300, hardware I.D. 302, and/or password 304, as shown in FIG. 3. When the user fulfills the security requirements the control data (if defined via the licensing system 102) can be downloaded and stored in the security device or key accordingly, wherein the data includes at least a feature definition file(s) 214, as shown in FIG. 2. The feature definition files 214 specify the features that are to be enabled within the user application or device to be enabled, along with any associated characteristic data (e.g., licensing period, license type) that affects how the features are utilized. Put in another way, the feature definition file allows the control data integrated with a security device to be interpreted in different ways depending on the license data and/or features defined for that particular product. Hence, the feature definition file(s) 214 may vary from one system, device, application, or license to the next depending upon what functions or features associated with the license are to be activated, or deactivated.

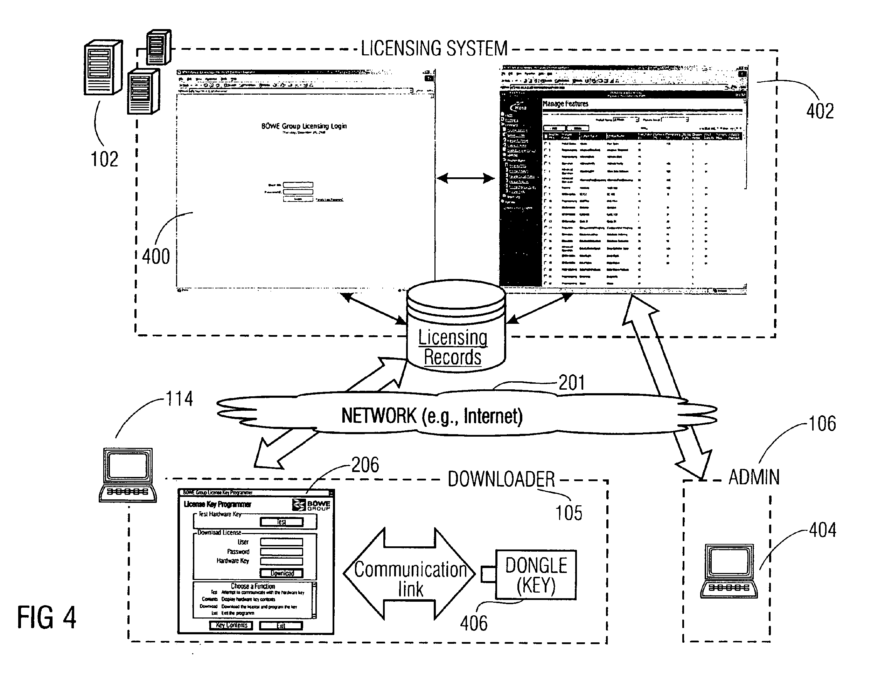

Turning now to FIG. 4, an exemplary depiction of how various users and devices interact within the function or feature enablement and licensing environment is shown. The functional capabilities of the licensing system 102 are accessed directly via a plurality and succession of web pages such as 400 and 402. As described above, while various users may access the licensing website 102, the functions they are able to perform may vary. For example, a user having product administrator access 106, operating from a remotely located computer 404 (e.g., a computer not intended to be utilized as a user access computer 114), may access the license configuration and feature definition creation functions of the licensing website 102. In this way, the product administrator 106 is able to perform the various functions described previously, including creating, defining and customizing a license on behalf of another user not having the same level of access to the website (e.g., a customer or sales representative having only downloader 104 capabilities). On the other hand, a user with only downloader 104 capabilities can only perform the download functions of the licensing website 102, or at best, access the customer (external) internet pages made available to all within the public domain. Hence, the downloader 105 utilizes the client key programmer 206 to access license data defined by the product administrator 106. The client key programmer 206 in turn communicates the control data to the security device (dongle) 406 upon activation. Those skilled in the art will easily recognize the enhanced security and management structure presented by such a licensing scheme, wherein the licensing development process is conducted hierarchically for better control and deployment of licensing data.

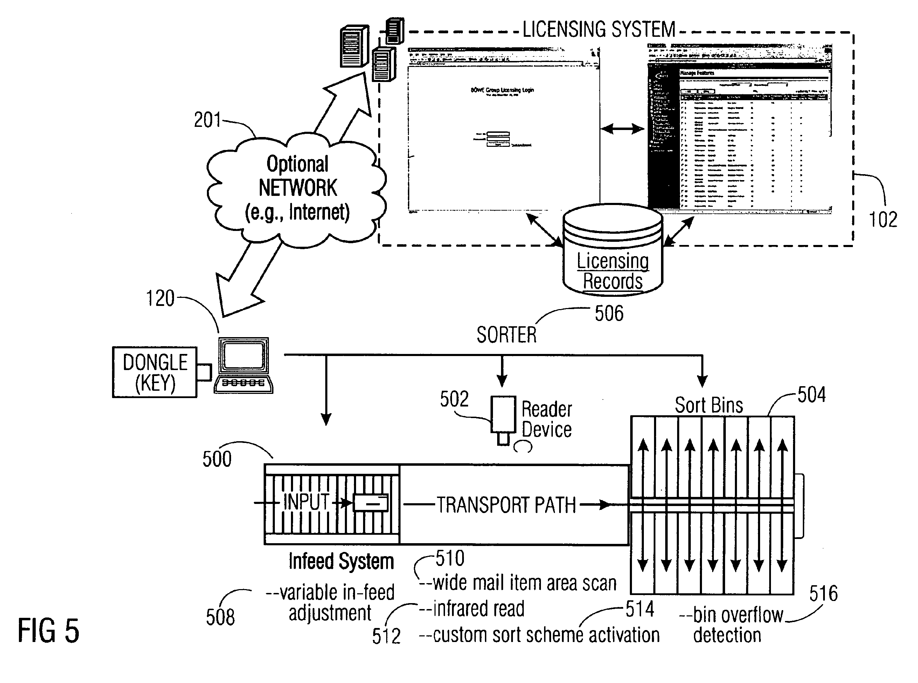

In FIG. 5, another exemplary depiction of how various users and devices interact within the feature enablement and licensing environment is shown. In this case, the user access computer 114 is a server application computer 120 (alternatively, could be a primary key usage computer 118), which may optionally be connected to a network 201 for direct communication with the licensing system. [For practical purposes, those skilled in the art will recognize that the network link need not be directly engaged between the server application computer 120 and the licensing system in the mail processing or document factory environment as depicted. The dongle may be integrated with necessary control data prior to being coupled to the server application computer 120]. The server application computer 120 is capable of communicating with a plurality of processing devices or components 500-504. For enterprises that utilize large scale processing devices, such as sorters or other high speed transport devices, it is not uncommon for the server application computer 120 to also act as a primary control computer-a computer for facilitating the control and operational features of a processing device comprised of various components. So, for example, a mail sorting device 506 may be comprised of various components, including but not limited to in-feed systems 500, readers 502, mail bins 504, etc., all of which must work together with proper timing in order to process mail items. The primary control computer would monitor the operations of the sorter 506 and execute the necessary functions (e.g., software functions) of each component of the sorter. Although the devices must operate interdependently, each device has independent features available for enablement.

The first component of the sorter 506, the mail in-feed system 500, has an available feature known as variable in-feed speed adjustment 508. The reader device 502 has various features available including wide mail item area scan 510, infrared read 512, and custom sort scheme activation 514. Finally, the sorter 506 includes a plurality of mail bins having an available bin overflow detection feature 516. While these features are available, they are not necessarily enabled for usage within the sorter system without the proper licensing. In such circumstances, activation (or deactivation) of the one or more functions or features of each component of the sorter would require usage of a different dongle associated with each feature, or the usage of a different primary control computer for each component. In other words, independent feature needs would be accommodated via independent processes; creating no synergy between the feature capabilities of one component versus another.

Such an unintelligible and loosely managed approach to feature enablement and licensing is eliminated however via practice of the teachings herein. Within the scope of the present exemplary teachings, the features of each independent component of the sorter are organized and configured centrally via a centralized licensing system 102-hence enabling complete management of each individual component of the system. As such, each individual run-time feature desired to be licensed and enabled for usage by the sorter can be configured for integration by the server application computer 120 via a single security device. Alternatively, multiple security devices may be coupled (e.g., daisy chained) to the server application computer 120 for enabling the features of the multiple components while still maintaining complete management via a centralized licensing system. Still further, a single dongle may be employed to enable a plurality of features and/or products of varying types (e.g., software, hardware or combinations thereof) to be activated for usage. Those skilled in the art will appreciate such capability, which allows for better overall management, control, maintenance and deployment of licenses within an enterprise utilizing a plurality of devices requiring feature enablement.

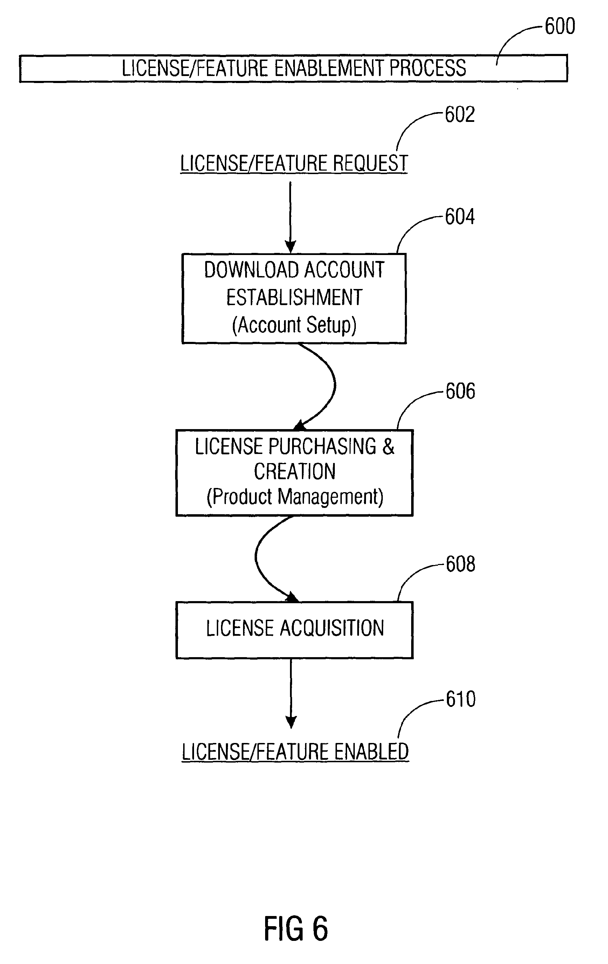

In FIG. 6, an exemplary high level flowchart depicting the overall product licensing and enablement process 600 is shown. Each of the steps depicted in FIG. 6 entail additional processing steps, which may be performed by varying users 100 hierarchically, and are described in the subsequent figures. As a first step in the process (event 602), a request for a license or associated function or feature to be enabled for a given device or software application is made by either a customer directly, a sales representative acting on behalf of the customer, a technician responsible for maintenance of the device for the customer, or any other agent of the licensing vendor acting in response to a license request. Once the request is acknowledged and confirmed (e.g., a formal purchase order is authorized by the client), an account is formally established for the customer or the user acting on behalf of the customer (event 604). This step, when completed, may also be considered the establishment of download privileges for a particular person or entity in connection with a license. Next, or in some instances concurrently with event 604, the product management phase is transacted (event 606), which entails license creation and purchase authorization. Finally, the license is acquired by the customer or user acting on behalf of the customer (event 608), signifying the enablement and availability of the license and its associated features (event 610). Events 604 through 608 are described in more detail in the following paragraphs.

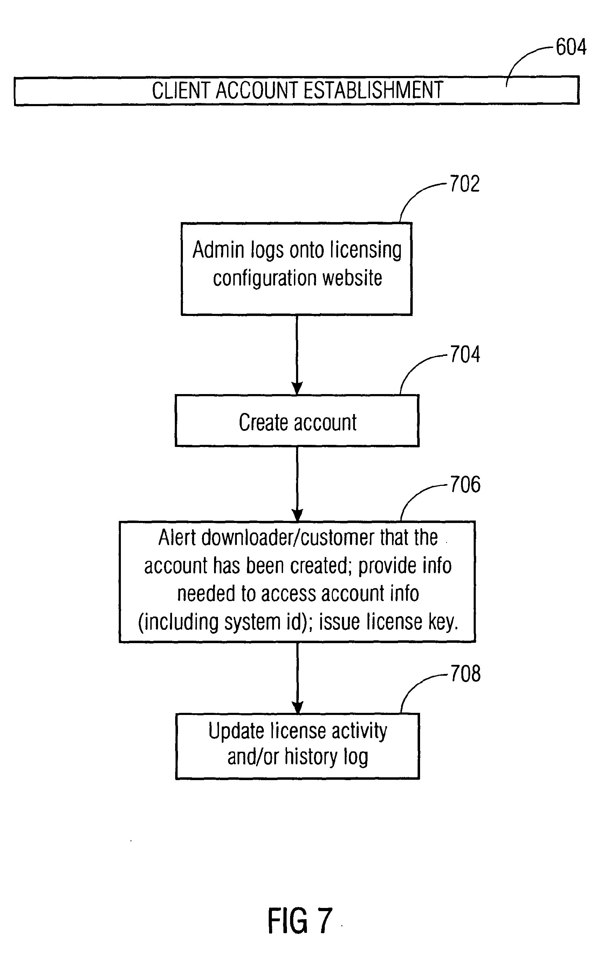

As shown in FIG. 7, once a license request is confirmed, an account must be established in connection with that request 604. To facilitate this need, an authorized user, typically a product administrator 106 logs onto the licensing website 102 and creates an account for the downloader 104, which may be the customer directly or user acting on behalf of the customer (events 702 and 704). Various data may need be input with relation to the downloader 104, including but not limited to first and last name data, e-mail address, contact numbers, company name, etc. Once the account is established with relation to the downloader 104, the account information along with account access requirements are forwarded to the downloader (e.g., via e-mail communication), corresponding to event 706. Included with the establishment of the account is a system identification (ID), a uniquely assigned value (e.g., numeric, alphanumeric) which allows all activities associated with licensing and feature enablement process to be accounted for and associated with each other. As such, the system ID affords greater management of the licensing process by establishing a central, unique reference point for all instances of license activity. The system ID information is also sent along with the account information for future reference by the downloader. Optionally, a blank license key (a dongle not yet integrated with control data) is assigned and sent to the downloader at the provided address during this time, although this step may occur at another point in the licensing and feature enablement process 600. Persistent throughout the execution of steps 702 through 706, the various instances of license activity for the assigned system ID are stored to a history log (event 708). Those skilled in the art will recognize, however that persistent logging of events can also occur at the end of a sequence of licensing steps as opposed to immediately subsequent to the execution of an event.

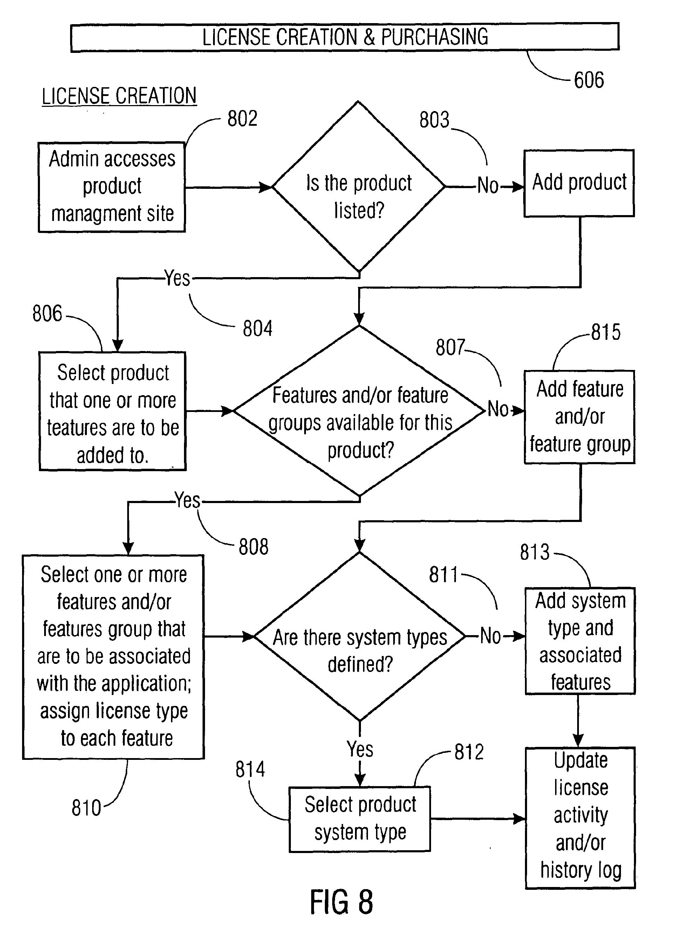

Once the downloader account is established (event 700), the license must be created in connection with the account, as shown in FIG. 8. License creation is performed by a user having product administrator access 108, where the product administrator 108 logs onto the licensing system 102 and accesses the product management and administration functions of the licensing website. If the application, device, product, etc. for which licensed functions or features are to be added is already listed on the website (event 804), the product administrator 108 selects the applicable listing (event 806), and selects any of the one or more individual features or feature groups that are available for that particular listing (events 808 and 810). Once the desired features or feature groups to be associated with the license are selected, the system type for which the license is to be assigned is selected (event 812), and again the various instances of license activity throughout this process are stored to a history log (event 814) for association with the assigned system ID.

While features refer to a single executable functional capability, feature groups refer to a plurality of features which are categorized by group. Hence, the combination of several individual features, when logically grouped with respect to a particular product, form a feature group. For example, in a machine vision product, there may be many feature groups (and sub groups) used to logically group all the features; a feature group called "Hardware" may be used for all hardware related features, while another feature group called "Operations" may be used for all the licensed operations that the machine vision product can perform. In instances where there is no product listing (event 803) or feature group (event 807) defined, the product administrator may simply define such characteristics by clicking an add button made available on the licensing webpage 102, or by entering the data via another linked page (e.g., a manage feature group pop-up window)-this action corresponds to event 815. Any means by which feature groups or features may be added and customized via a network communication process is within the scope of the present teachings.

In addition to defining features and/or feature groups when needed, system types may also need to be defined in instances where they are undefined (events 811 and 813). Once the product has been configured with one or more licensable features (events 815 or 810), then the product system types must be selected (event 812) or created (event 813). A product system type is used to define standard system configurations that are used when selling the product (e.g., the software or hardware application for which licensed features are desired) to the customer 108. An example of a system type can be found in various product marketing designations, such as Platinum, Gold, Silver, Deluxe, etc., all designations which indicate differing levels of functional capability. System types allow the product administrator to specify a standard set of default features for all of the systems that are of a similar type. This concept also allows the product administrator to restrict the available features based on the system type selected. Such definitions allow products requiring licensing to be more readily customized to meet standard customer needs. Again, the system type is configured via the appropriate action buttons, forms, windows made available through the licensing website 102.

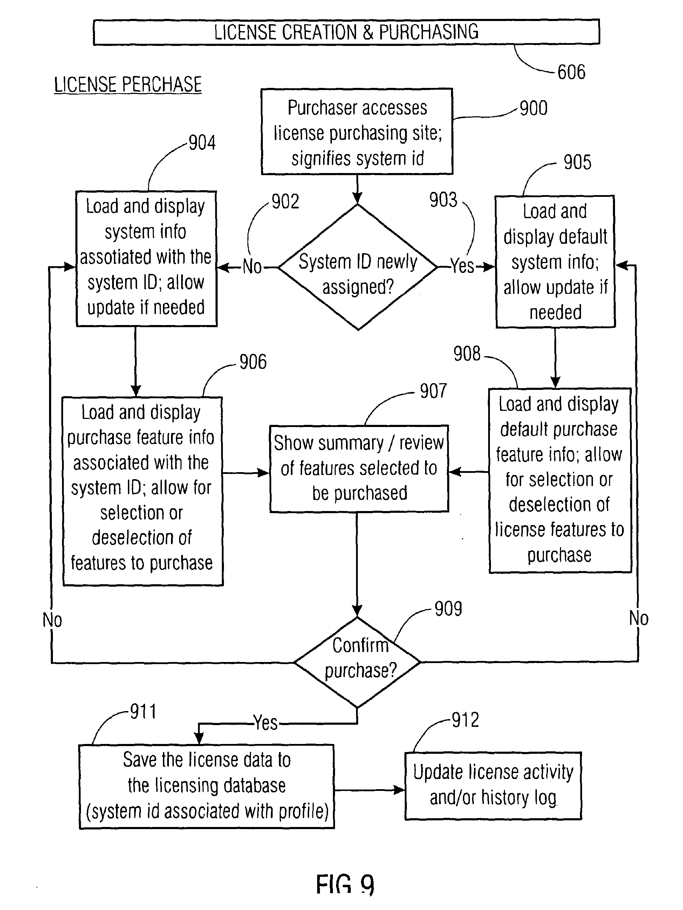

Once the license is configured with respect to a unique system ID, including at least the selection of or establishment of the product to be licensed, the feature and/or feature groups to be associated with the license, and the system type and/or definition, the license must be purchased. The exemplary steps to license purchasing are indicated in FIG. 9. Specifically, a user having purchaser access 108 (or advanced purchasing access 110) to the licensing system 102 accesses the purchasing function web pages of website (e.g., logs on) and specifies the assigned system ID (event 900). When the system ID corresponds to an existing product and/or system (event 902), the system information related to this system ID is displayed (event 904), and the purchaser is allowed to modify the existing information as needed. When the system ID corresponds to a newly assigned system ID (event 903), then default system information is displayed (event 905), and the purchaser is allowed to modify the system information to reflect the desired system information. While the type of system information to be entered may vary, example system information is shown below:

### System information:

- Product - the product that you would like to purchase a license for
- License Type - the license type to use when defining this license
- System Type - the system type to use when creating/updating the license
- License Key - which key the license will ultimately be downloaded to (this can be left unassigned until a key is known - this will not prevent purchasing the license)
- Customer - name of the customer/entity that purchased the product
- Owner - license key owner information
- P/O - a purchase order number, if available
- Notes - a text box to enter additional notes about the system

Once the system information is displayed and/or modified, the purchase features associated with the system ID are displayed, and the purchaser 108 is able to select or deselect the various features or feature groups to be purchased (event 906). In instances where the system ID is newly assigned (event 903), default feature and feature group information is presented, and is made available for modification by the purchaser (event 908). Once these steps are complete, a summary of the features selected for purchase are displayed to allow the purchaser 108 to make a final review before confirming the purchase (event 909). Events 904 or 905 are repeated if changes or modifications need to be made prior to confirmation. Otherwise, the control data to be applied for the product with the established system information and associated system ID is stored to the database (event 911). As before, the various instances of license activity throughout this process are stored to a history log (event 912) for association with the assigned system ID.

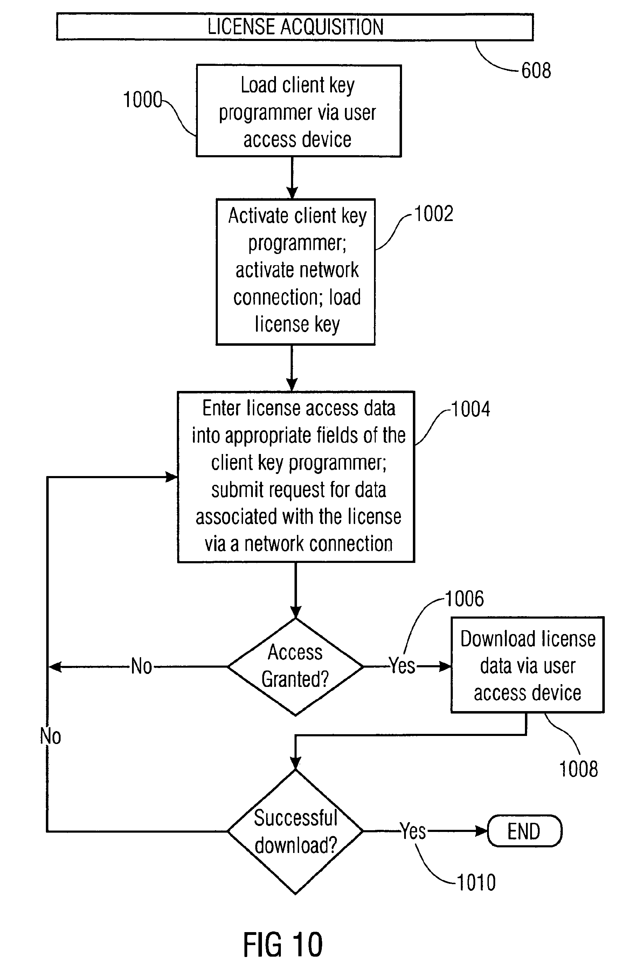

Turning now to FIG. 10, an exemplary flow chart depicting the license acquisition process is shown. As mentioned previously, various user access devices 114 may be utilized to perform this task. If not already done, the client key programmer 206 (FIG. 3) should be installed onto the user access device 114 for which the control data will be downloaded (event 1000), and then subsequently activated (event 1002). Likewise, the security device (dongle) that was associated with the system or product to be configured-that for which the system ID was associated-is coupled to the device for which the control data will be downloaded. Activation of the client key programmer invokes a network connection to be established with the licensing system 102 (event 1000). During this phase of the process, the user having download privileges would enter the necessary access information into the appropriate fields of the client key programmer 206 (e.g., security device data, username, and password), and submit this data to the licensing system 102 via the network communication (event 1004). Once it is determined that the downloader 104 has the appropriate credentials to access the licensing system 102 (e.g., as determined by associating the security device with the system ID stored to the licensing system database), access is granted and the control data download process commences (events 1006 and 1008). Successful downloading of the license data is then signified by one or more alerts or notices being displayed by the client key programmer 206, corresponding to event 1010.

Having acquired the control data, the control data may be integrated properly with the security key or device. Those skilled in the art will recognize that various means of data integration, or programming, of a security device or key exist, and that the teachings herein are not limited to any specific method of integration. As mentioned earlier, however, it is feasible with the correct security protocols in place for the control data to be downloaded, stored, and then transferred to another device having a license key for which the control data is to be integrated. Regardless of how the control data is integrated with the licensing key, the teachings disclosed herein will more effectively ensure proper securitization and management of sensitive media and data.

The teachings presented above provide additional benefits that may be of particular interest to those skilled in the art. One such benefit of the web-based licensing scheme is integrated install-time feature enablement control and run-time install feature enablement control. Install-time control corresponds to a security based installation scenario wherein a user wishing to load a product onto a system (e.g., a software CD being loaded onto a computing device) loads a full featured version of the product, and restricts certain loading processes via the usage of a security device (e.g., dongle). Run-time control corresponds to the restriction of features/processes after installation, but during the run-time of the product. The licensing process described herein enables run-time or install-time feature enablement to be commenced. Moreover, the run-time and install-time secure licensing scheme may be employed by the same security device. Just as importantly, the licensing process described herein allows for the proper enablement of hardware, software, firmware, middleware and other operational modules via the same security. This is advantageous in numerous ways, but especially with respect to cost and simplicity-minimized numbers of security devices being used to minimize cost, and simpler management and deployment of security devices for which to activate features within an enterprise.

Another benefit of the present teachings lies in the autonomous, distributed licensing environment. While other licensing schemes invoke the usage of a single dedicated user and/or user device for the management of security devices (e.g., a product manager assigned to a specific client account), the teachings herein involve a plethora of users, all of which influence the licensing process in a different way. This allows for greater involvement of key individuals within the licensing process, and enables varied degrees of access to the licensing system for enhanced security. So, for example, a single product manager responsible for administering a client's account could share license development responsibilities with a sales representative and client to influence the creation of the license. Of course, in this case the users would be assigned varying degrees of access and control over the licensing process. In such a licensing environment, a security device could be effectively programmed from anywhere on any device having a universal interface compatible with the security device.

As yet another benefit of the present teachings, the licensing system described herein allows for the persistent tracking and archiving of license activity throughout the licensing process. In this way, each instance of activity engaged in by each of the users and user access devices, along with any license data generated with respect to such activity, may be maintained and accounted for. One of skill in the art can readily see the advantage of such archiving ability with respect to license maintenance activities such as updates and renewals. This feature allows for better management of the overall licensing process, as each instance of activity may be associated with the uniquely assigned system identification value for future reference.

In addition, the archiving of licensing activity may provide useful data to the product manufacturer in terms of indicating areas of license deficiency that may be translated into licensing opportunities. For example, consider an automated document factory (ADF) system or document production system (DPS) comprising a suite of complimentary software and/or hardware products. The exemplary licensing scheme presented herein, when used in connection with such systems during the lifecycle of a document (e.g., from product creation to final delivery), would allow the user of the ADF or DPS products to dynamically activate features as needed relative to their needs. As each licensing activity occurs, this would generate a sequential trail of licensing requests, which could allow the licensing system to deduce other licensing needs of the user in advance or in the future. If the user requested electronic indicia capability to be licensed for usage with their document creation software, this may also indicate a need for the activation of an indicia print quality and integrity feature to be utilized later on by a vision system during the document finishing or inserting phase. Indeed, the licensing system could be configured to generate messages suggestive of an action the user may take based on this information, wherein the messages are catered and appropriated according to their level of access to the licensing system (e.g., a message pertaining to a licensing opportunity that is crafted differently for a sales person versus a customer).

Control functions, diagnostic features, security features, and other executable tasks relative to the licensing process described herein may be programmatically executed through the usage of web services. Web services, also known as application services, are Web-based enterprise applications that use open, XML (Extensible Markup Language) based standards and transport protocols to exchange data with calling clients, such as through a web browser or other executable application operable by a computing device. Generally, web services are implemented as one or more executable modules that facilitate seamless data exchange for greater control and interoperability between systems. Of course those skilled in the art will recognize other data processing and service fulfillment platforms may be used to achieve this end. Although the discussion above has focused largely on the methodologies, those skilled in the art will recognize that those methodologies may be embodied in specific equipment, systems or devices. Also, many of the operations described above may be carried out by processing of the license data and/or associated execution of software, firmware, or microcode operating on processors or computers of any type used to provided the functionalities of the servers, client devices and/or programmed control for the various manufacturing (mail processing) elements shown in the system drawings. Additionally, code for implementing such operations may be in the form of computer instruction in any form (e.g. source code, object code, interpreted code, etc.) stored in or carried by any computer or machine readable medium.

Program aspects of the technology may be thought of as "products" typically in the form of executable code and/or associated data that is carried on or embodied in a type of machine readable medium. Media include any or all of the memory of the computers, processors or the like, or associated modules thereof, such as various semiconductor memories, tape drives, disk drives and the like, which may provide storage at any time for the software programming. All or portions of the software may at times be communicated through the Internet or various other telecommunication networks. Such communications, for example, may enable loading of the software from one computer or processor into another. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software.

Terms regarding computer or machine "readable medium" (or media) as used herein therefore relate to any physical medium or transmission medium that participates in providing instructions or code or data (e.g. license records or license related information) to a processor for execution or processing. Such a medium may take many forms, including but not limited to, non-volatile media and volatile media as well as carrier wave and physical transmission media.

Only the preferred embodiments of the present subject matter and but a few examples of its versatility are shown and described in the present disclosure. It is to be understood that the present subject matter is capable of use in various other combinations and environments and is susceptible of changes and/or modifications within the scope of the inventive concept as expressed herein.

## Claims

1. A method comprising the steps of:
providing a user with access to a website of a licensing system for at least one mail processing product;
authenticating the user, via a user identification protocol, as a valid user from among a plurality of valid users, wherein different levels of user access capability for the purpose of accessing licensing data, are provided to groups comprising one or more of the valid users;
providing the authenticated user a level of licensing data access assigned to one of said groups of which the authenticated user is a member; and
providing access to at least one attribute of the licensing data for at least one mail processing product from the licensing system, based at least in part on the granted level of access.

2. The method of claim 1, further comprising granting a license to the at least one attribute of the licensing data for the at least one mail processing product.

3. The method of claim 2, wherein the granting is based on the accessed at least one attribute, providing control data via the Internet, for use in activating at least one operational function of the at least one mail processing product.

4. The method of claim 1, wherein the control data comprises data for loading into a security device to be associated with the at least one mail processing product for the activation of the at least one operational function.

5. The method of claim 1, wherein the website of the licensing system is on the world wide web.

6. A licensing transaction comprising the steps of:
receiving a request for enablement of a selected feature from among a plurality of features associated with a type of mail processing product via a licensing website;
sending control data, wherein the control data is for activation of the selected feature to be enabled for the identified mail processing product, to a security device for association with the identified mail processing product; and
recording the activation of the selected feature for the identified mail processing product.

7. The licensing transaction of claim 6, further comprising:
completing a purchase transaction of the selected feature.

8. The licensing transaction of claim 6, wherein the receiving step further comprises:
receiving a unique identification of the mail processing product.

9. The licensing transaction of claim 6, wherein the step of recording further comprises:
recording the activation of the selected feature for the identified mail processing product in a licensing database associated with the licensing website.

10. The licensing transaction of claim 6, wherein the step of recording further comprise:
recording instances of interaction with the licensing website by each of a plurality of valid users having different levels of user access to the licensing website with respect to the request.

11. The licensing transaction of claim 10, wherein the each of a plurality of valid users access the licensing website via a user identification protocol.

12. A method comprising the steps of:
establishing an Internet link between a user access device and a licensing system server;
obtaining control data for provisioning at least one operating function of at least one product from the licensing system server via the Internet; and
supplying the control data from the user access device to a security device that is to be used to activate the at least one operating function of the at least one product, to program the security device.

13. The method of claim 12, further comprising the step of authenticating the user of the user access device via a user identification protocol.

14. The method of claim 12, wherein the user access device is selected from a user terminal, a computer on the product, or a server.

15. The method of claim 12, further comprising the step of downloading a client key user software to the user access device from the licensing system server.

16. The method of claim 12, further comprising the step of providing a graphical user interface by execution of a user application for facilitating communication of the user access device with the licensing system server.

17. The method of claim 16, further comprising accessing a website on the licensing system server via the user application.

18. The method of claim 12, wherein the step of obtaining comprises:
obtaining information regarding a plurality of available unlicensed features of the product;
presenting the information regarding the plurality of available unlicensed features to the user via the graphical user interface;
receiving selection of one of the plurality of available unlicensed features from the user via the graphical user interface;
sending the selection to the licensing system server; and
receiving the control data from the licensing system server,
wherein the received control data is for activation of the selected licensed feature of the product.

19. The method of claim 12, wherein the step of authenticating the user includes prompting the user and obtaining from the user one or more of the following: user name, password or product identification number.

20. The method of claim 12, further comprising:
archiving a record of user activity and result of the secure activation; and
associating an assigned system identification value for the recorded user activity.

21. The method of claim 12, further comprising:
activating one or more feature of a product to be used with the security device by coupling the security device to the product.

22. The method of claim 12, further comprising:
activating one or more feature of a product to be used with the security device by coupling the security device to the product.

23. The method of claim 12, further comprising:
activating one or more feature of each of a plurality of product to be used with the security device by coupling the security device to each of the products.

24. The method of claim 12, wherein the step of authenticating includes authenticating the user from amongst a plurality of users having a plurality of different levels of user access capabilities.

25. The method of claim 12, further comprising the step of supplying control data to the security device from the user access device to program the security device for deactivating at least one operating function of the product to be used with the security device.

26. The method of claim 12, wherein the product is selected from a software device, a hardware device or a device comprising hardware and software.

27. The method of claim 12, wherein the user access device is separate from the product.

28. The method of claim 12, wherein the user access device is a programmable controller of the product.

29. The method of claim 28, wherein the product is a mail processing system.

30. A computer system programmed to implement the method of claim 12.

31. A software product comprising executable instructions for programming a computer to implement the method of claim 12, and a machine-readable medium bearing the instructions.

32. A method comprising the steps of:
receiving an access request at a licensing system server from a user access device by way of a Internet link;
receiving a selection request of at least one operating function of at least one product; and
transmitting control data to a security device via the Internet link and the user access device, so as to allow the security device to enable the selected operating function on the product.

33. The method of claim 33, wherein the product is selected from a software device, a hardware device or a device comprising hardware and software.

34. The method of claim 32, further comprising the step of authenticating identification of the user of the user access device

35. The method of claim 34, wherein the step of authenticating includes:
authenticating the user from amongst a plurality of users having a plurality of different levels of user access capabilities.

36. A computer system programmed to implement the method of claim 32.

37. A software product comprising executable instructions for programming a computer to implement the method of claim 32, and a machine-readable medium bearing the instructions.
